# EUROPEAN PATENT APPLICATION

(11) **EP 2 237 395 A1**
(43) Date of publication of application: **06.10.2010**
(21) Application number: 09700493.1
(22) Date of filing: 06.01.2009
(51) Int. Cl.: H02K 5/10

(54) **UNDERWATER-DRIVEN MOTOR ASSEMBLY**

(30) Priority: 11.01.2008 JP 2008004159; 15.12.2008 JP 2008318885
(71) Applicant: Kabushiki Kaisha Toshiba, Minato-ku Tokyo 105-8001 (JP)
(72) Inventor: SHIMAMURA, Mitsuaki, Tokyo (JP); MATSUZAKI, Kenji, Tokyo (JP); HOZUMI, Hisashi, Tokyo (JP); MUKAI, Naruhiko, Tokyo (JP); TOGASAWA, Yutaka, Tokyo (JP); YUGUCHI, Yasuhiro, Tokyo (JP)
(74) Representative: HOFFMANN EITLE
(86) International application number: PCT/JP2009/000017
(87) International publication number: WO 2009/087963

(57) **Abstract**

A casing (2) of a submersible electric motor used underwater which houses a reduction gear device (3) and an electric motor (4) is filled with an electrical insulation material (8) whose thermal conductivity is higher than that of air. The heat dissipation ability of the electric motor (4) can be improved by using the electrical insulating material (8) having a high thermal conductivity. Accordingly, the capacity of the coil of the motor (4) can be increased and the output power / volume ratio can be improved.

## Description

### TECHNICAL FIELD

The present invention relates to a submersible electric motor assembly for underwater use.

### BACKGROUND ART

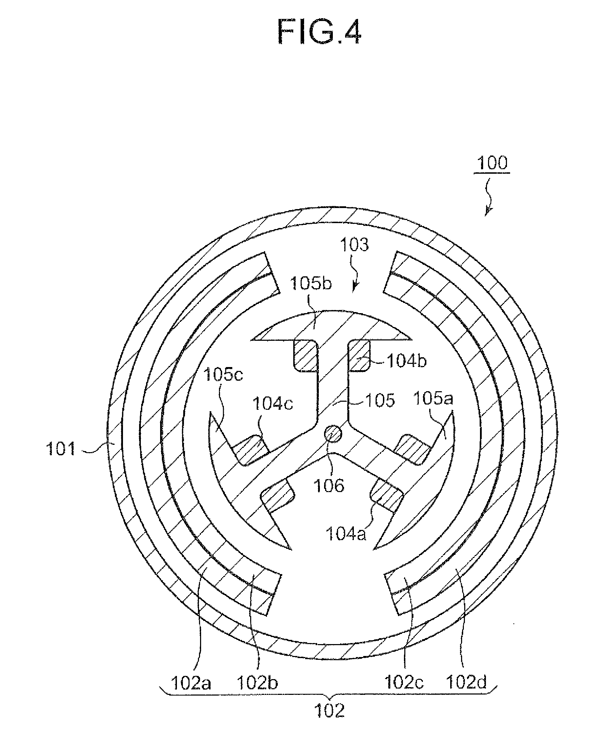

The principle of operation of a typical electric motor will be described with reference to FIG. 4. FIG. 4 is a traverse cross-sectional view of an electric motor, taken along a plane perpendicular to the axial direction.

The electric motor 100 has a cylindrical motor housing 101 in which a stator 102 composed of permanent magnets is provided. The permanent magnets constituting the stator 102 are arranged so that poles 102a and 102c are "S" poles, and poles 102b and 102d are "N" poles. The permanent magnets are opposed with opposite polarities on the inner sides, so that a parallel magnetic field is generated between the components of the stator 1.02. A rotor 103 is arranged inside the stator 102. The rotor 103 is composed of a core 105 on which coils 104a, 104b and 104c are wound, and a shaft 106 which supports the core 105. The core 105 has projections 105a, 105b and 105c which radially extend from the shaft 106. The coils 104a, 104b and 104c are wound around the projections 105a, 105b and 105c, respectively.

The operation of the electric motor 100 having such a configuration will be described below. When currents are passed through the coils 104a, 104b and 104c to magnetize the projection 105b as an N pole and the projections 105a and 105c as S poles, the projection 105b and the S pole 102c are attracted to each other, and the projections 105a and 105c and the N pole 102b are attracted to each other. This rotates the rotor 103 clockwise. The currents flowing through the coils 104a, 104b and 104c are switched in direction to exercise control to make the portion above the shaft 106 shown in FIG. 4 an N pole and the portion below the shaft 106 an S pole, so that the rotor 103 continues rotating clockwise. The torque of the rotor 103 is transmitted to outside through the shaft 106 as the output power of the electric motor 100.

In this way, the electric motor is driven by the magnetic fields of the stator and the rotor causing an interaction to rotate the rotor. Electric motors of various structures are now used, including a structure in which the stator is equipped with coils and the rotor permanent magnets, one in which both the stator and rotor are equipped with coils to generate a magnetic field, and one in which a stator is arranged inside a. rotor so that the outer rotor rotates. For underwater use, electric motors of any structures need to have a water proof structure for preventing the coils from a short circuit.

In particular, electric motors that are applied to a robot and the like for use in a nuclear reactor desirably have radiation proof as well as a smaller size for the sake of operation in a narrow space aside from the water proof. Electric motors will drop in output power if simply reduced in size. For electric motor downsizing, the output power / volume ratio therefore needs to be improved to maintain a required output power. The coil capacity (maximum passable current) can be increased to improve the output power / volume ratio, whereas the increased amount of heat generation during electric motor operation requires that the heat dissipation ability of the coils be improved to prevent burnout.

Conventional techniques used to improve the electric motor's heat dissipation ability are predicated on an operation in the air, such as introducing cooling air to around the coils to promote cooling (for example, see Patent Document 1).

Electric motors for underwater use are typically built in a water proof casing. A short circuit is prevented by purging the interior of the casing with air or removing moisture in the casing (for example, see Patent Document 2).
Patent Document 1: Japanese Patent Application Laid-Open Publication No. 3-178535
Patent Document t 2: Japanese Patent Application Laid-Open Publication No. 2001-86690

### DISCLOSURE OF THE INVENTION

### PROBLEMS TO BE SOLVED BY THE INVENTION

The foregoing technique for promoting the electric motor's heat dissipation by using cooling air is predicated on an in-the-air operation, and is therefore not capable of maintaining the water proof in a casing under the water.

It is thus an object of the present invention to provide a submersible electric motor assembly which makes the electric motor water proof by using a causing, and improves the heat dissipation ability of the electric motor to allow underwater use with a required output power in a smaller size than heretofore.

### MEANS FOR SOLVING THE PROBLEMS

In order to solve the above-mentioned problems, according to the present invention, there is provided a submersible electric motor assembly comprising: a casing; an electric motor that is accommodated in the casing; and an electric insulating substance that is filled between the electric motor and the casing and has a thermal conductivity higher than that of air, wherein the electric motor includes: a stator, a rotor that is rotated by an interaction with a magnetic field of the stator, a coil that magnetizes at least either one of the stator and the rotor, and a shaft that is rotated by rotation of the rotor.

### ADVANTAGES OF THE INVENTION

According to the submersible electric motor assembly of the present invention, there is provided heat dissipation ability higher than that of conventional electric motors that are accommodated in a casing to make the coils water proof. The coils can thus be increased in capacity. The increased coil capacity improves the output power / volume ratio of the electric motor, so that the electric motor can be reduced in size.

### BRIEF DESCRIPTION OF THE DRAWINGS

FIG. 1 is a longitudinal sectional view showing an overview of a submersible electric motor assembly according to a first embodiment of the present invention.
FIG. 2 is a longitudinal sectional view showing an overview of the structure of a reduction gear unit, an electric motor, and a resolver shown in FIG. 1.
FIG. 3 is a longitudinal sectional view showing an overview of a submersible electric motor assembly according to a second embodiment.
FlG. 4 is a traverse cross-sectional view showing an overview of a typical electric motor.

### EXPLANATION OF REFERENCE SYMBOLS

1: submersible electric motor assembly
2: casing
3: reduction gear unit
4: electric motor
5: resolver
6: O-ring
7: bearing
8: electric insulator
11: cable
12: motor cable
13: resolver cable
14, 23:protecting part
24: moisture sensor
31: reduction gear shaft
32: sun gear
33: planet gear
34: inward gear
35: plate
41: motor housing
42: rotor
43: motor shaft
44: stator
45: bearing
46: brush
47: commutator
48: coil
51: exciting coil
52: detection coil
100: electric motor
101: motor housing
102: stator
102a, 102c: S pole
102b,102d: N pole
103: rotor
104a, 104b, 104c: coil
105: core
105a, 105b, 105c: projection
106: shaft

### BEST MODE FOR CARRYING OUT THE INVENTION

Hereinafter, embodiments of the present invention will be described with reference to the drawings.

### FIRST EMBODIMENT

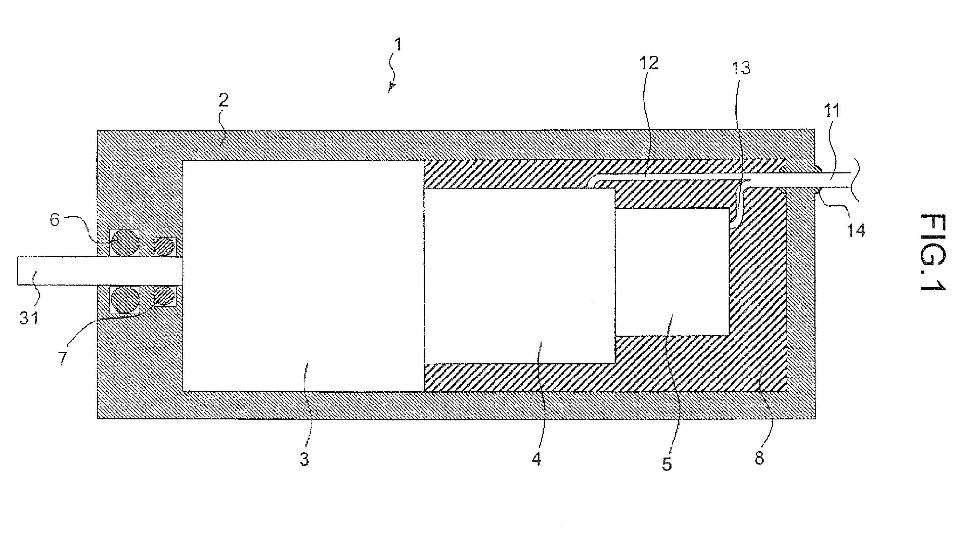

A first embodiment of the present invention will be described below with reference to FIG. 1. FIG. 1 is a longitudinal sectional view showing an overview of a submersible electric motor assembly according to the present embodiment.

The submersible electric motor assembly 1 includes a reduction gear unit 3, an electric motor 4 and a resolver 5 which are connected in series, and a casing 2 in which such components are accommodated. A cable 11 is led into the casing 2 so as to run through the casing 2. The cable 11 branches into a motor cable 12 and a resolver cable 13. The motor cable 12 is connected to the electric motor 4, and the resolver cable 13 is connected to the resolver 5. The motor cable 12 is wires for feeding electricity from a not-shown power supply to the electric motor 4. The resolver cable 13 is wires for transmitting an output signal of the resolver 5 to a not-shown output unit. The motor cable 12 and the resolver cable 13 are tied and coated into the cable 11. The portion of the casing 2 where the cable 11 runs through is made water proof and fixed by a protecting part 14 which is made of, for example, a resin or RTV rubber (Room-Temperature Vulcanized rubber).

A reduction gear shaft 31 is extended from the reduction gear unit 3 so as to run through the casing 2. The reduction gear shaft 31 is supported by a bearing 7. The portion of the casing 2 where the reduction gear shaft 31 runs through is made water proof by an O-ring 6 which is arranged in the casing 2. The reduction gear unit 3 converts the output power of the electric motor 4 into low-speed high torque, and outputs the torque to the reduction gear shaft 31.

The gap between the casing 2 and each of reduction gear unit 3, the electric motor 4 and the resolver 5 built in the casing 2 is filled with an electric insulator 8. For example, the electric insulator 8 is made of at least any one of gel materials consisting primarily of silicone, epoxy resins, polyimide resins, and aromatic polyether ketone resins such as polyether ether ketone.

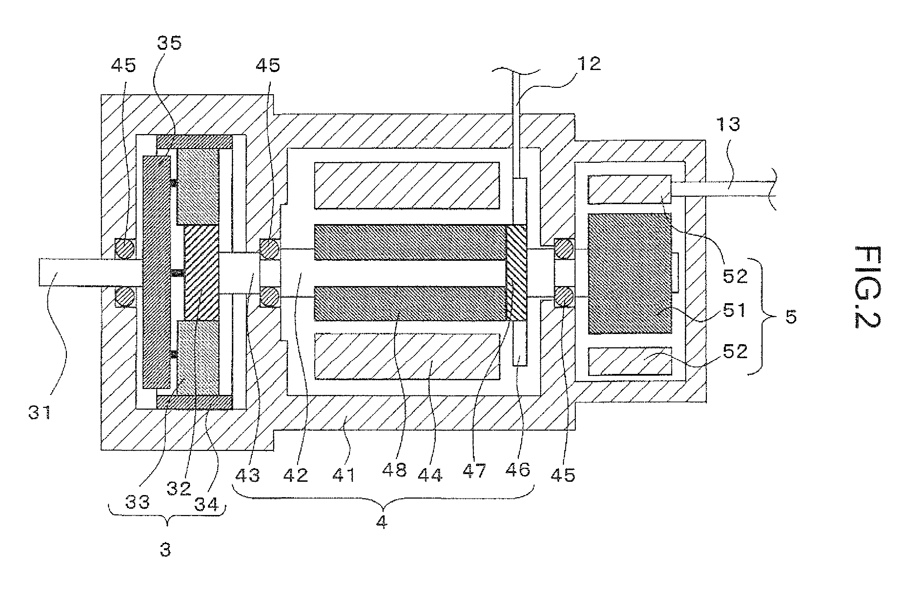

Taking a brushed DC motor as an example, the internal structure of the reduction gear unit 3, the electric motor 4, and the resolver 5 will be described with reference to FIG. 2. FIG. 2 is a longitudinal sectional view showing an overview of the internal structure of the reduction gear unit 3, the electric motor 4, and the resolver 5. FIG. 2 shows an example where a single stage of planetary reduction gear is implemented as the reduction gear unit 3. A plurality of stages may be used to increase the reduction ratio as needed.

The reduction gear unit 3 in FIG. 2 includes: a sun gear 32 which is integrated with a motor shaft 43 accommodated in a motor housing 41; a plurality of planet gears 33 which are arranged to surround the sun gear 32; an inward gear 34 which is arranged around the planet gears 33; a plate 35 which is rotated by the revolution of the planet gears 33 around the sun gear 32; and the reduction gear shaft 31 which is integrated with the plate 35.

The electric motor 4 includes: a rotor 42 which is accommodated in the motor housing 41; the motor shaft 43 which is integrated with the rotor 42; coils 48 which are arranged around the rotor 42; brushes 46 which are connected to the motor cable 12; a commutator 47 which makes contact with the brushes 46 for the sake of switching the direction of currents to pass through the coils 48; and a stator 44 which is composed of permanent magnets that are arranged to surround the coil 48 and generate a magnetic field. The coils 48 generate magnetic fields when fed with electricity from the not-shown power supply through the motor cable 12, the brushes 46 and the commutator 47. As described previously, the magnetic fields generated by the coils 48 and the magnetic field from the permanent magnets of the stator 44 cause an interaction to rotate the rotor 42. One of the ends of the motor shaft 43 is connected to the resolver 5. The other end is connected to the reduction gear unit 3. Bearings 45 are provided in the motor housing 41 so as to support the motor shaft 43.

The resolver 5 includes an exciting coil 51 which is connected to the motor shaft 43, and a detection coil 52 which is arranged to surround the exciting coil 51. The detection coil 52 is connected to the resolver cable 13.

The operation of the present embodiment will be described below. The coils 48 of the rotor 42 are fed with electricity from the motor cable 12 through the brushes 46 and the commutator 47, whereby the rotor 42 and the motor shaft 43 are rotated. Since the inward gear 34 is fixed, the rotation of the sun gear 32 integral with the motor shaft 43 makes the planet gears 33 rotate in mesh with the inward gear 34 and the sun gear 32, and revolve around the sun gear 32 as well. The revolution of the planet gears 33 rotates the plate 35, whereby the reduction gear wheel shaft 31 integral with the plate 35 is rotated. Consequently, the reduction gear unit 3 converts the output power of the motor shaft 43 into low-speed high torque, and outputs the torque to the reduction gear shaft 31- For example, the reduction gear shaft 31 is attached to a driving unit of a robot.

When the exciting coil 51 of the resolver 5 is rotated by the rotation of the motor shaft 43, the detection coil 52 outputs a sinusoidal signal corresponding to the angle of rotation of the exciting coil 51. The signal is output to a not-shown output unit through the resolver cable 13. The angle of rotation of the motor shaft 43 can be read from the output signal of the resolver 5.

When the submersible electric motor assembly 1 is driven in this way, the electric motor 4 rises in temperature due primarily to the heat generation of the coils 48. The electric insulator 8 has a thermal conductivity higher than that of air, and can thus improve the heat dissipation ability of the electric motor 4 as compared to the case where the interior of the casing 2 is purged with air.

That is, although the electric motor includes the brushes 46 and commutator 47 that are not immersible into a liquid, like the DC motor described in the present embodiment, the electric motor 4 is accommodated in the casing 2 to form a water proof structure in which the gap between the electric motor 4 and the casing 2 is filled with the electric insulator 8. Such a structure improves the heat dissipation ability of the electric motor 4, so that the coils can be increased in capacity and the output power of the submersible electric motor assembly 1 can be increased with respect to the volume. It is, therefore, possible to provide a small-sized electric motor of high output power.

Such a structure can also eliminate the need for an air supply tube that has conventionally been needed to purge the interior of the casing 2 with air.

Even if a. gap that may allow water permeation is formed in the O-ring 6, the protecting part 14, or the casing 2 due to a long-term operation, an impact, or the like, the solid electric insulator 8 can maintain the water proof for improved soundness.

Tungsten powder may be mixed into the electric insulator 8 for improved radiation proof.

The present embodiment has dealt with the configuration where the stator 44 is equipped with the permanent magnets, and the rotor 42 is equipped with the coils 48. However, electric motors of various other structures may be used to achieve the same effects including a structure in which the stator 44 is equipped with coils and the rotor 42 is equipped with the permanent magnets, one in which both the stator 44 and the rotor 42 are equipped with coils to generate a magnetic field, and one in which the stator 44 is arranged inside the rotor 42 so that the outer rotor 42 rotates.

### SECOND EMBODIMENT

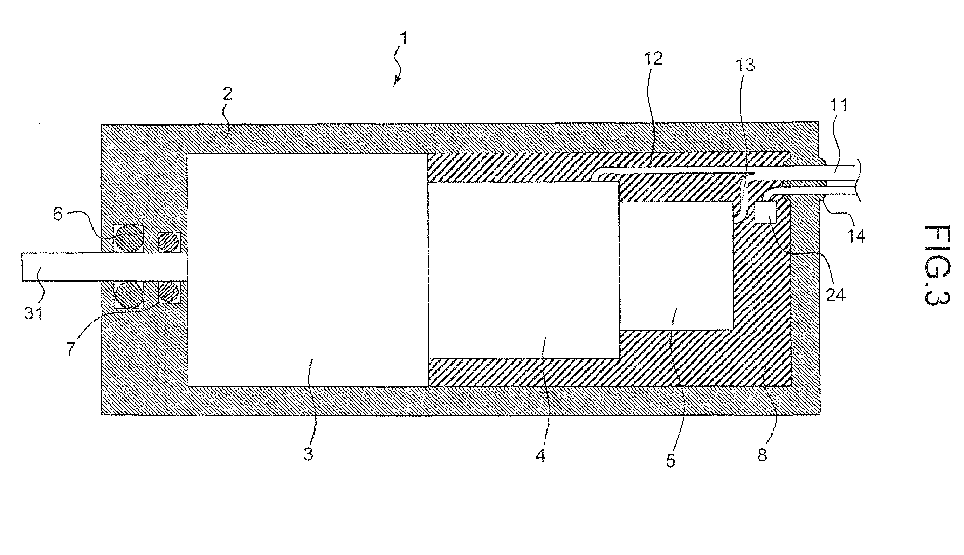

A second embodiment of the present invention will be described below with reference to FIG. 3. FIG. 3 is a longitudinal sectional view showing an overview of a submersible electric motor assembly according to the present embodiment. The same components as in the first embodiment will be designated by like reference numerals, and redundant description will be emitted.

In the present embodiment, a moisture sensor 24 is provided in the casing 2. The moisture sensor 24 monitors the moisture inside the casing 2. Thus, if, for example, water is gradually leaking into the casing 2 through the protecting part 14, it is possible to detect the water permeation before the water reaches the electric motor 4 or the resolver 5 to cause an insulation breakdown. The moisture sensor 24 can be laid out to locate the leaking point. For example, if there are a plurality of locations where the casing 2 is run through and is given a water proof treatment like the protecting part 14, a plurality of moisture sensors 24 may be arranged accordingly to locate the leaking point.

## Claims

1. A submersible electric motor assembly comprising:
a casing;
an electric motor that is accommodated in the casing; and
an electric insulating substance that is filled between the electric motor and the casing and has a thermal conductivity higher than that of air, wherein
the electric motor includes: a stator, a rotor that is rotated by an interaction with a magnetic field of the stator, a coil that magnetizes at least either one of the stator and the rotor, and a shaft that is rotated by rotation of the rotor.

2. The submersible electric motor assembly according to claim 1, wherein:
the electric motor includes a coil that is attached to the rotor and magnetizes the rotor, and brushes and a commutator that switch a direction of an electric current passing through the coil according to a phase of rotation of the rotor; and
the stator includes a permanent magnet.

3. The submersible electric motor assembly according to claims 1 or 2, comprising rotation phase detecting means that is arranged in series with the electric motor and accommodated in the casing.

4. The submersible electric motor assembly according to any one of claims 1 to 3, wherein the electric insulating substance contains at least one out of a group consisting of gel material consisting primarily of silicone, epoxy resin, aromatic polyether ketone resin and polyimide resin.

5. The submersible electric motor assembly according to any one of claims 1 to 4, wherein the electric insulating substance contains tungsten powder.

6. The submersible electric motor assembly according to any one of claims 1 to 5, comprising a moisture sensor that is provided in the casing.
